# EUROPEAN PATENT APPLICATION

(11) **EP 4 645 518 A1**
(43) Date of publication of application: **05.11.2025**
(21) Application number: 25172825.9
(22) Date of filing: 28.04.2025
(51) Int. Cl.: H01M 10/42, H01M 10/48, H01M 50/204, H02J 7/00

(54) **BATTERY SYSTEM**

(30) Priority: 29.04.2024 US 202463639708 P
(71) Applicant: Delta Electronics, Inc., Taoyuan City 333 (TW)
(72) Inventor: YU, Chieh, 333 Taoyuan City (TW); PENG, Yen-Kai, 333 Taoyuan City (TW)
(74) Representative: Riccardi, Elisa

(57) **Abstract**

A battery system includes a first battery module and a plurality of second battery modules coupled to the first battery module. The first battery module includes a battery management system, and a plurality of first battery cells electrically coupled to each other. The first battery cells are electrically coupled to the battery management system to be managed by the battery management system. Each of the second battery modules includes a plurality of second battery cells electrically coupled to each other. The second battery cells are coupled to the battery management system of the first battery module to be managed by the battery management system. The battery management system is coupled to an external system to transmit signals with the external system.

## Description

### BACKGROUND

### Field of Invention

The disclosure relates to a battery system. More particularly, the disclosure relates to a battery system that combines different battery module architectures as an energy storage device.

### Description of Related Art

Nowadays, technology is advancing at an extremely fast pace. Stable and large amount of power supply is required in all industries. Therefore, large-scale batteries or energy storage systems, such as container-type energy storage systems, have been developed to meet this demand. These large-scale energy storage systems can store electricity generated from renewable energy sources, such as solar power and wind power, helping to address the volatility of renewable energy and reduce reliance on fossil fuels and carbon emissions. As such, the large-scale energy storage systems are considered one of the key technologies for establishing a low-carbon economy. However, these large-scale energy storage systems are bulky, relatively heavy, and difficult to transport, and are inconvenient and dangerous to assemble, which makes it difficult to optimize the use of space inside the container. In addition, such batteries or energy storage systems are usually designed for a single application, that is, after voltage capacity specification is determined, it is difficult to adapt the batteries or energy storage systems for other uses. Therefore, existing technologies exhibit various shortcomings, and a solution is needed to address the aforementioned problems.

### SUMMARY

The disclosure provides a battery system including a first battery module and a plurality of second battery modules. The first battery module includes a battery management system, and a plurality of first battery cells electrically coupled to each other. The first battery cells are electrically coupled to the battery management system to be managed by the battery management system. The second battery modules are coupled to the first battery module. Each of the second battery modules includes a plurality of second battery cells that are electrically coupled to each other. The second battery cells are electrically coupled to the battery management system of the first battery module to be managed by the battery management system. The battery management system is coupled to an external system to transmit signals with the external system.

The disclosure further provides a battery system including a first battery module and a plurality of second battery modules. The first battery module includes a first housing, a battery management system, and a plurality of first battery cells that are electrically coupled to each other. The battery management system and the first battery cells are accommodated in the first housing. The first battery cells are electrically coupled to the battery management system to be managed by the battery management system. The second battery modules are coupled to the first battery module. Each of the second battery modules includes a second housing, and a plurality of second battery cells that are electrically coupled to each other. The second battery cells of each of the second battery modules are accommodated in the second housing. The second battery cells are electrically coupled to the battery management system of the first battery module to be managed by the battery management system. The first housing and the second housings have the same size. A number of the second battery cells in each of the second housings is greater than a number of the first battery cells in the first housing, so that voltage capacity of each of the second battery modules is greater than voltage capacity of the first battery module. The battery management system is coupled to an external system to transmit signals with the external system.

It is to be understood that both the foregoing general description and the following detailed description are by examples, and are intended to provide further explanation of the disclosure as claimed.

### BRIEF DESCRIPTION OF THE DRAWINGS

The disclosure can be more fully understood by reading the following detailed description of the embodiment, with reference made to the accompanying drawings as follows:
Fig. 1 is a schematic diagram illustrating a battery system according to some embodiments of the disclosure;
Fig. 2A is a schematic diagram illustrating an internal structure of a first battery module in Fig. 1;
Fig. 2B is a schematic diagram illustrating an internal structure of a second battery module in Fig. 1;
Fig. 3 is a schematic diagram illustrating a battery system according to some embodiments of the disclosure;
Fig. 4 is a schematic diagram illustrating a battery system according to some embodiments of the disclosure;
Fig. 5 is a schematic diagram illustrating a battery system according to some embodiments of the disclosure;
Fig. 6 is a schematic diagram illustrating a battery system according to some embodiments of the disclosure;
Fig. 7 is a schematic diagram illustrating a battery system according to some embodiments of the disclosure; and
Fig. 8 is a schematic diagram illustrating a battery system according to some embodiments of the disclosure.

### DETAILED DESCRIPTION

The terms used herein are intended to describe specific embodiments only and are not intended to be limiting of the disclosure. As used herein, singular forms such as "a", "this", and "the" also contain plural forms. As used herein, the terms "comprising", "including", 'having', "containing", etc., are open-ended and shall be interpreted to mean "including but not limited to."

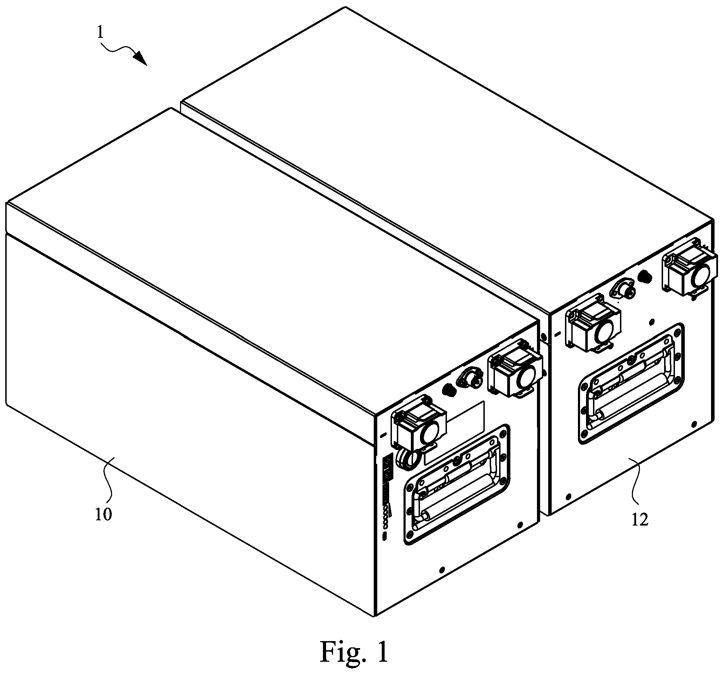

Referring to Fig. 1, Fig 1 is a schematic diagram illustrating a battery system 1 according to some embodiments of the disclosure. As shown in Fig. 1, the battery system 1 includes a first battery module 10 and at least one second battery module 12, which are coupled to each other. It should be noted that one second battery module 12 is illustrated in Fig. 1, but, in practice, the number of the second battery modules 12 may be increased as required. For example, the number of the second battery modules 12 may be increased according to required total voltage capacity.

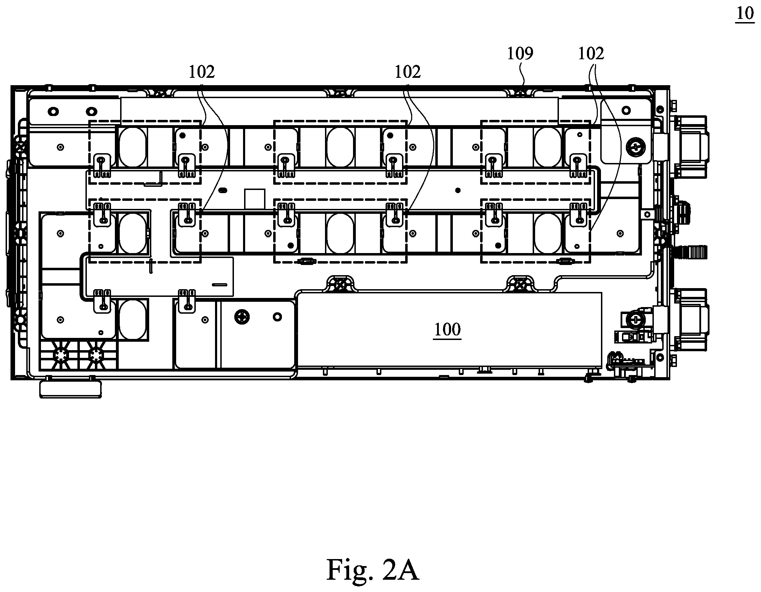

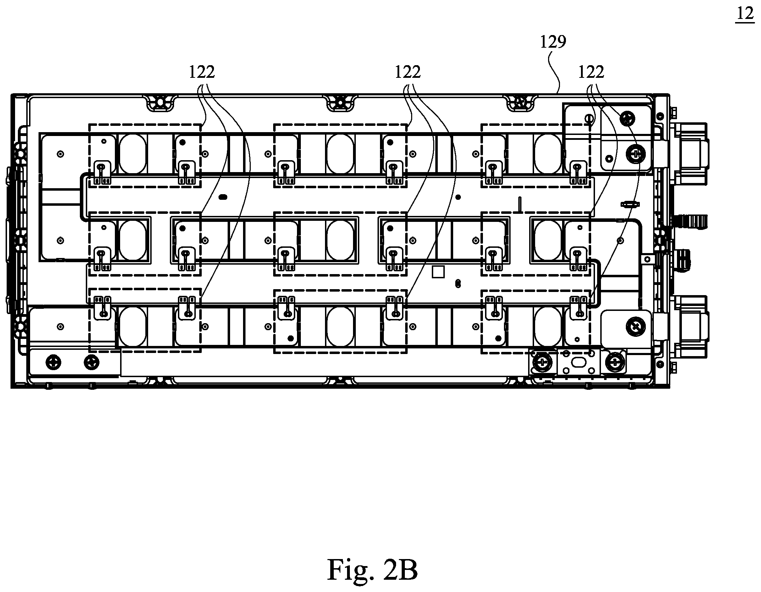

Further referring to Figs. 2A and 2B, Fig. 2A is a schematic diagram illustrating an internal structure of the first battery module 10 in Fig. 1, and Fig. 2B is a schematic diagram illustrating an internal structure of the second battery module 12 in Fig. 1. As shown in Fig. 2A, the first battery module 10 includes a battery management system 100, and a plurality of first battery cells 102 that are electrically coupled to each other. In some embodiments, the first battery cells 102 are electrically coupled to each other in series, and the voltage capacity of the first battery module 10 may be determined based on the number of the first battery cells 102. The battery management system 100 may be located at a side inside a first housing 109 of the first battery module 10, and is electrically coupled to the first battery cells 102 that are connected to each other in series to manage each of the first battery cells 102. In practice, the battery management system 100 may monitor voltage, current, temperature, etc., of each of the first battery cells 102 to provide each of the first battery cells 102 a protection mechanism for overvoltage, undervoltage, overcurrent, short circuit, over temperature, etc..

As shown in Fig. 2B, the second battery module 12 includes a plurality of second battery cells 122 that are located in a second housing 129 of the second battery module 12 and that are electrically coupled to each other. In some embodiments, the second battery cells 122 are electrically coupled to each other in series, and the voltage capacity of the second battery module 12 may be determined based on the number of the second battery cells 122. In some embodiments, the first housing 109 of the first battery module 10 and the second housing 129 of the second battery module 12 are of the same size, and since the second battery module 12 includes the second battery cells 122 but not the battery management system, the second battery module 12, compared to the first battery module 10, has more space inside for accommodating more battery cells. That is to say, the number of the second battery cells 122 may be greater than the number of the first battery cells 102. In some embodiments, the first battery module 10 may include six or seven first battery cells 102, and the second battery module 12 may include nine or more second battery cells 122, but the disclosure is not limited thereto. Thus, the voltage capacity of the second battery module 12 may be designed to be greater than the voltage capacity of the first battery module 10. For example, the voltage capacity of the first battery module 10 may be 22.4 volts, and the voltage capacity of the second battery module 12 may be 28.8 volts. Therefore, by using one first battery module 10 and one second battery module 12, a system with a voltage range of 48 to 51.2 volts that is commonly used in the industry may be achieved.

In some embodiments, the sizes of the first housing 109 of the first battery module 10 and the second housing 129 of the second battery module 12 may be 250*266*560 (mm), but the disclosure is not limited thereto. Furthermore, in some embodiments, the weight of the first battery module 10 may be 55 kilograms, and the weight of the second battery module 12 may be 65 kilograms, but the disclosure is not limited thereto. As such, the first battery module 10 and the second battery module 12 may not be too large or too heavy, allowing for easy transport and manual assembly.

Due to the abovementioned design of the sizes of the housings of the first battery module 10 and the second battery module 12, the first battery module 10 and the second battery module 12 may be easily assembled without wasting space when assembled into a large-scale battery or energy storage system. For example, the sizes of the first housing 109 and the second housing 129 may be designed according to a container or an energy storage cabinet of various specifications, so that the first battery module 10 and the second battery module 12 may easily fill the space in the energy storage cabinet without leaving any irregular space.

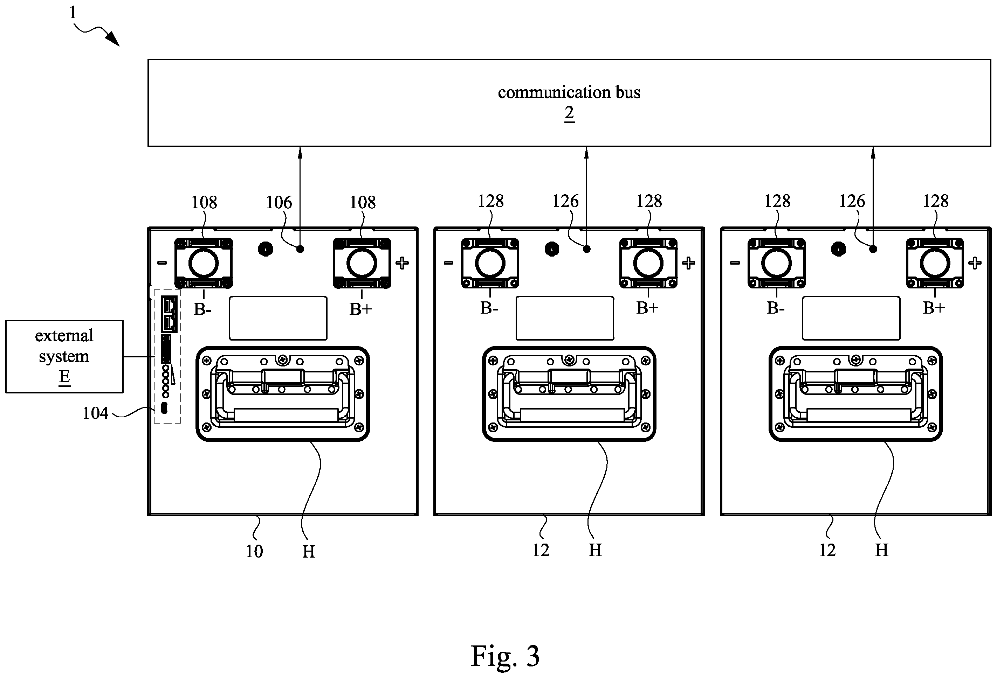

Further referring to Fig. 3, Fig. 3 is a schematic diagram illustrating a battery system 1 according to some embodiments of the disclosure. As shown in Fig. 3, the battery system 1 includes one first battery module 10 and two second battery modules 12, which are coupled with each other. In the embodiments of Fig. 3, one side surface of the first battery module 10 includes a battery management display interface 104 and a first communication interface 106. The battery management display interface 104 is connected to the battery management system 100 inside the first battery module 10, and the first communication interface 106 is connected to the first battery cells 102 inside the first battery module 10. On the other hand, a side surface of each of the second battery modules 12 includes a second communication interface 126 that is connected to the second battery cells 122 inside the second battery module 12. The first communication interface 106 may connect with the second communication interface 126 of each of the second battery modules 12 to transmit signals between the first battery module 10 and the second battery modules 12. Furthermore, the side surface of the first battery module 10 further includes a first power interface 108 that is connected to the first battery cells 102 inside the first battery module 10 for outputting power (discharging) or receiving power (charging). The side surface of each of the second battery modules 12 further includes a second power interface 128 that is connected to the second battery cells 122 inside the second battery module 12 for outputting power (discharging) or receiving power (charging).

In embodiments of Fig. 3, the first battery module 10 and the second battery modules 12 are respectively connected to a communication bus 2 via the first communication interface 106 and the second communication interfaces 126. Therefore, the first battery module 10 and the second battery modules 12 are signally connected via the communication bus 2. Specifically, the second battery cells 122 of the second battery modules 12 are connected to the battery management system 100 of the first battery module 10 via the second communication interfaces 126, the communication bus 2, and the first communication interface 106. Thereby, the battery management system 100 of the first battery module 10 may also manage the second battery cells 122 of the second battery modules 12.

The battery management display interface 104 of the first battery module 10 is connected to the battery management system 100 to display status of batteries managed by the battery management system 100. In embodiments of Fig. 3, the battery management display interface 104 is configured to display status of batteries of the first battery module 10 and the second battery modules 12 managed by the battery management system 100. More specifically, the battery management display interface 104 is configured to display the status of the first battery cells 102 of the first battery module 10 and the second battery cells 122 of the second battery modules 12.

Furthermore, the battery management system 100 of the first battery module 10 may be further connected to an external system E via the battery management display interface 104 to transmit signals with the external system E. In some embodiments, the external system E may be a part of a large-scale energy storage system, such as a power regulation system, a control system, or an energy management system, etc., so that various control functions, such as power regulation or energy management, etc., may be performed on the first battery module 10 and the second battery modules 12 through the external system E.

As described above, the first battery module 10 and the second battery modules 12 have the first power interface 108 and the second power interfaces 128, respectively, for outputting power or receiving power. Each of the first power interface 108 and the second power interfaces 128 has a positive terminal and a negative terminal, for example, B+ terminals and B- terminals shown in Fig. 3. Through the positive terminal and the negative terminal respectively thereof, the first battery module 10 and the second battery modules 12 may be connected in series or in parallel according to different power supply requirements. In some embodiments, in Fig. 3, the B+ terminal of the first power interface 108 of the first battery module 10 may be connected to the B- terminal of the second power interface 128 of the adjacent one of the second battery modules 12, and the B+ terminal of the second power interface 128 of the adjacent one of the second battery modules 12 may be connected to the B- terminal of the second power interface 128 of the next one of the second battery modules 12, and so on, thereby forming a series connection between the first battery module 10 and the second battery modules 12. In other embodiments, the B+ terminal of the first power interface 108 of the first battery module 10 and the B+ terminals of the second power interfaces 128 of the second battery modules 12 may be connected to a first power bus (not shown) and the B- terminal of the first power interface 108 and the B- terminals of the second power interfaces 128 may be connected to a second power bus (not shown), thereby forming a parallel connection of between the first battery module 10 and the second battery modules 12.

Referring to Fig. 3 again, as shown in Fig. 3, handles H are disposed on the side surfaces of the first battery module 10 and the second battery modules 12. As described above, compared with a large-scale energy storage system (e.g., a container-type energy storage system), the first battery module 10 and the second battery modules 12 are smaller in size and lighter in weight, which allows the first battery module 10 and the second battery modules 12 to be easily transported and be conveniently assembled. As such, the handles H may be gripped for transporting and assembling the battery modules.

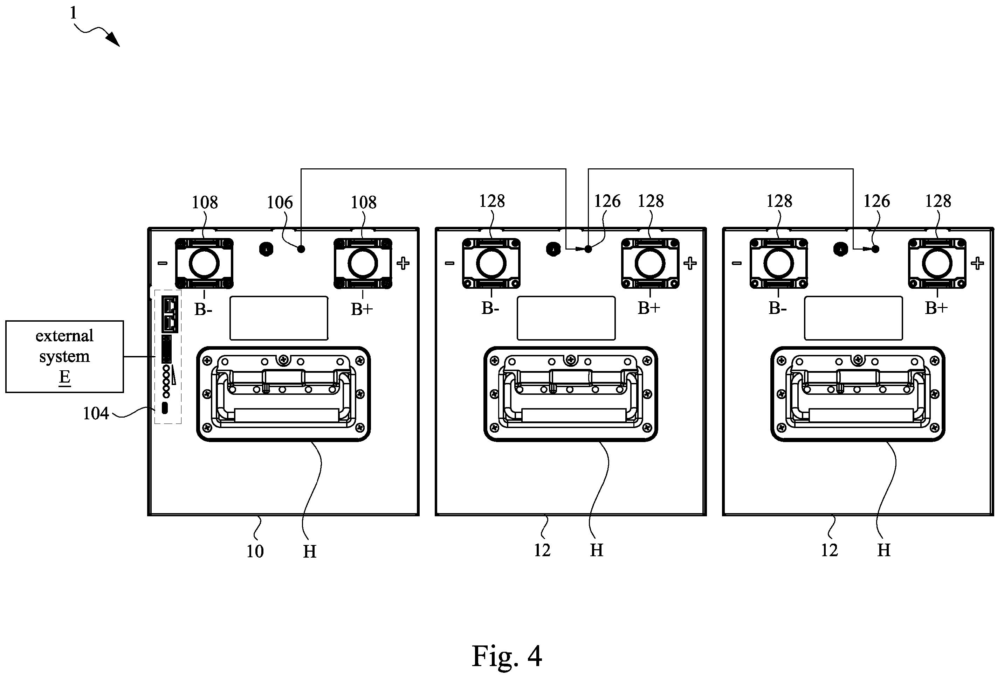

Referring to Fig. 4, Fig. 4 is a schematic diagram illustrating the battery system 1 according to some embodiments of the disclosure. As shown in Fig. 4, the first communication interface 106 of the first battery module 10 and the second communication interfaces 126 of the second battery modules 12 are not connected to the communication bus 2, but are connected to each other in a daisy chain manner. Specifically, the first communication interface 106 of the first battery module 10 is connected to the second communication interface 126 of the adjacent one of the second battery modules 12, and the second communication interface 126 of the adjacent one of the second battery modules 12 is connected to the second communication interface 126 of the next one of the second battery modules 12, and so on.

**In** a large-scale energy storage system, many battery modules may be required to meet voltage capacity requirements of the energy storage system. Therefore, the large-scale energy storage system may include a plurality of the first battery modules 10, and each of the first battery modules 10 may be connected to a plurality of the second battery modules 12, so as to ensure that the total voltage capacity meets the requirements of the large-scale energy storage system. **In** addition, each of the first battery modules 10 and the second battery modules 12 is managed by at least one battery management system 100 to manage status of batteries thereof. Furthermore, the first housings 109 of the first battery modules 10 and the second housings 129 of the second battery modules 12 may be designed to have the same size according to the space of the large-scale energy storage system (e.g., an internal space of a container of a container-type energy storage system), so that the space of the large-scale energy storage space may be filled without leaving any irregular space during assembly.

As mentioned above, each of the first battery modules 10 includes the battery management system 100 to manage the first battery cells 102 thereof. Accordingly, the first battery modules 10 may be operated independently, or be connected in series or in parallel without requiring additional control device to manage the battery cells.

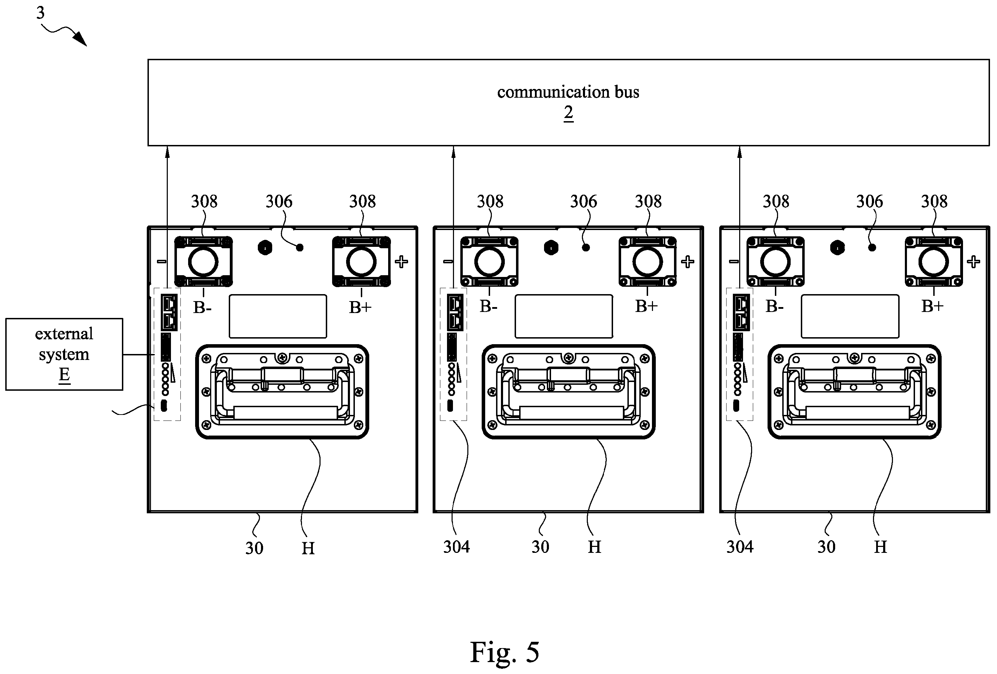

Referring to Fig. 5, Fig. 5 is a schematic diagram illustrating a battery system 3 according to some embodiments of the disclosure. As shown in Fig. 5, the battery system 3 includes a plurality of the first battery modules 30 that are connected to each other. It should be noted that, in the embodiments of Fig. 5, the number of the first battery modules 30 is three, but the disclosure is not limited thereto. When the number of the first battery module 30 is one, the first battery module 30 is used alone. The structure and functions of the first battery modules 30 are the same with as the structure and functions of the first battery module 10 of the aforementioned embodiments, and thus will not be described in detail herein. Each of the first battery modules 30 may be connected to the communication bus 2 via the battery management display interface 304 thereof to communicate with the communication bus 2. The battery management display interface 304 of one of the first battery modules 30 may be connected to the external system E to transmit signals with the external system E.

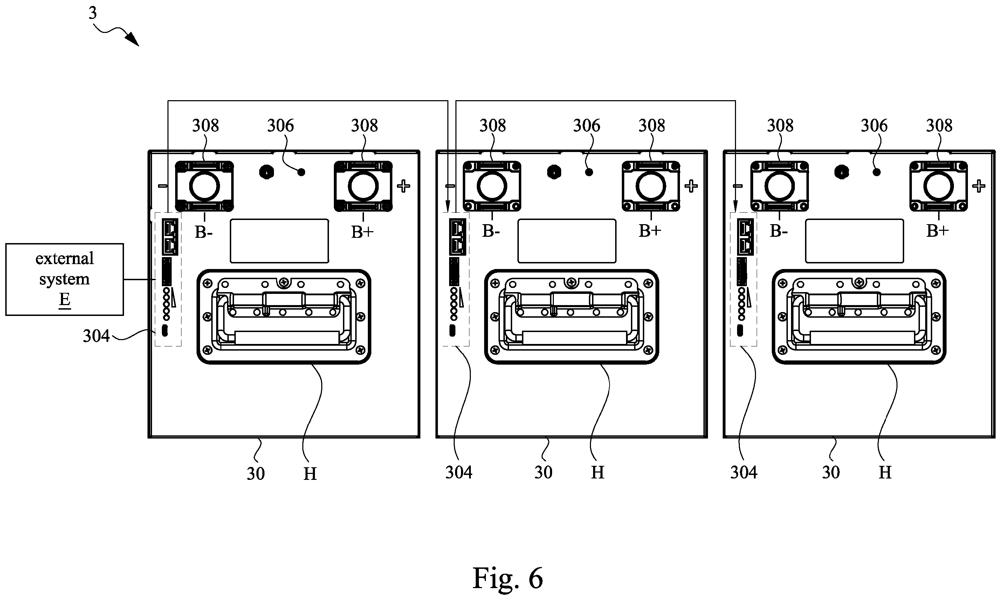

Referring to Fig. 6, Fig. 6 is a schematic diagram illustrating a battery system 3 according to some embodiments of the disclosure. As shown in Fig. 6, the battery system 3 includes a plurality of the first battery modules 3 that are connected to each other. The embodiments of Fig. 6 differ from the embodiments of Fig. 5 in that the first battery modules 30 of the battery system 3 are connected to each other in daisy chain manner instead of through the communication bus 2. Specifically, in Fig. 6, the battery management display interface 304 of the first one of the first battery modules 30 (the leftmost one of the first battery modules 30 in the figure) is connected to the battery management display interface 304 of the second one of the first battery modules 30 that is adjacent to the first one of the first battery modules 30, and the battery management display interface 304 of the second one of the first battery modules 30 is connected to the battery management display interface 304 of the third one of the first battery modules 30, and so on. The battery management display interface 304 of the first one of the first battery modules 30 is connected to the external system E, and transmits signals with the external system E.

Furthermore, in some embodiments, each of the first battery modules 30 of Figs. 5 and 6 may be connected to the B- terminal of the first power interface 308 of one of the first battery modules 30 that is next to the first battery module 30 via the B+ terminal of the first power interface 308 thereof, so that the first battery modules 30 are connected to each other in series. In other embodiments, the B+ terminals of the first power interfaces 308 of the first battery modules 30 of Figs. 5 and 6 may be connected to a first power bus (not shown), and the B- terminals of the first power interfaces 308 of the first battery modules 30 may be connected to a second power bus (not shown), so that the first battery modules 30 are connected to each other in parallel. In practice, whether the first battery modules 30 are connected to each other in series or in parallel depends on the power supply requirements of a large-scale energy storage system including the first battery modules 30, the disclosure is not limited thereto.

As mentioned above, compared with the first battery module, the second battery module does not include a battery management system and accommodates more battery cells. Therefore, in situations where a higher voltage capacity is required, a plurality of second battery modules may also be used to provide power.

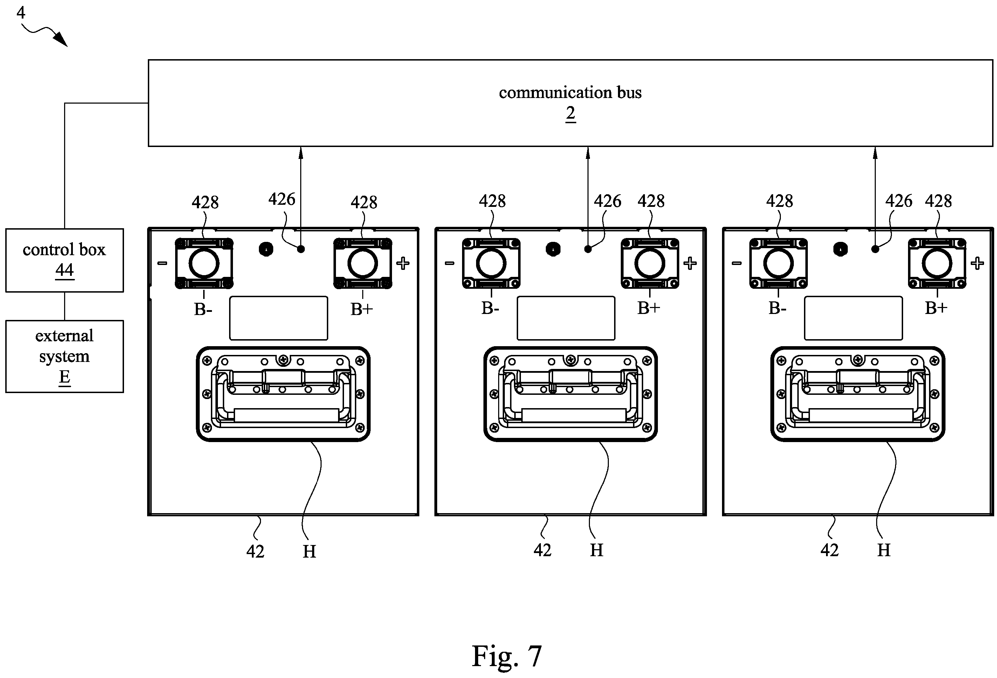

Referring to Fig. 7, Fig. 7 is a schematic diagram illustrating a battery system 4 according to some embodiments of the disclosure. As shown in Fig. 7, the battery system 4 includes a plurality of the second battery modules 42, and a control box 44 that is connected to the second battery modules 42. Since each of the second battery modules 42 includes the second battery cells but no a battery management system, the control box 44 is required to control and manage charge and discharge of the second battery cells of the second battery modules 42. The control box 44 has a battery management function. It should be noted that the number of the second battery modules 42 in the embodiments of Fig. 7 is three, but the disclosure is not limited thereto. Furthermore, the structure and functions of the second battery modules 42 are the same with as the structure and functions of the second battery module 12 of the aforementioned embodiments, and thus will not be described in detail herein.

As shown in Fig. 7, each of the second battery modules 42 is connected to the communication bus 2 via the second communication interface 426 thereof and the control box 44 is also connected to the communication bus 2, so that the control box 44 may communicate with each of the second battery modules 42 via the communication bus 2 to control and manage charge and discharge of the second battery cells of each of the second battery modules 42. The control box 44 may be connected to the external system E to transmit signals with the external system E.

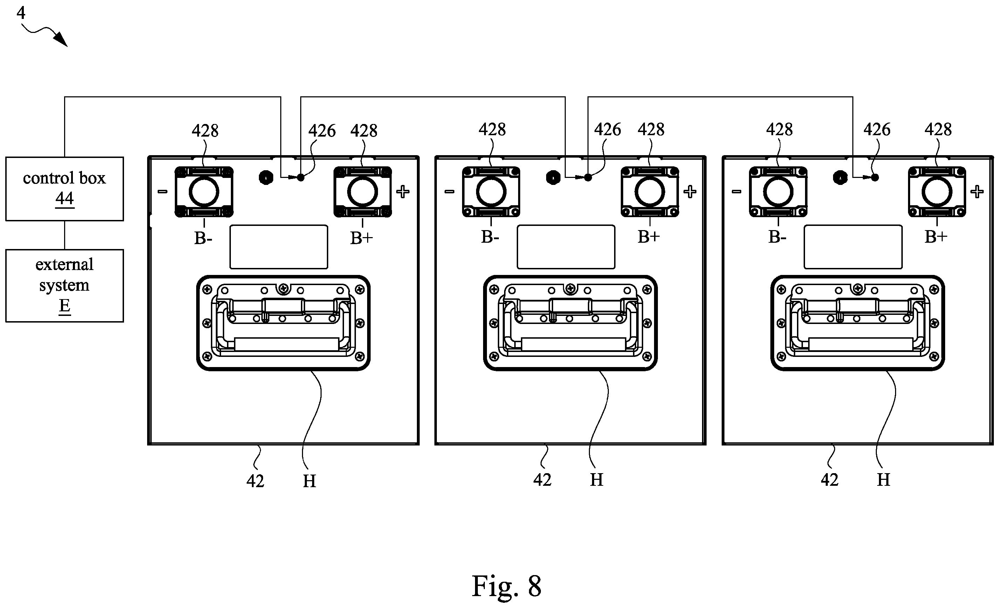

Referring to Fig. 8, Fig. 8 is a schematic diagram illustrating a battery system 4 according to some embodiments of the disclosure. As shown in Fig. 8, the battery system 4 includes a plurality of the second battery modules 42 and the control box 44, which are connected to each other. The embodiments of Fig. 8 differ from the embodiments of Fig. 7 in that the second battery modules 42 and the control box 44 of the battery system 4 are connected to each other in daisy chain manner instead of through the communication bus 2. Specifically, in Fig. 8, the control box 44 is connected to the second communication interface 426 of the adjacent one of the second battery modules 42, and the second communication interface 426 of the adjacent one of the second battery modules 42 is connected to the second communication interface 426 of the next one of the second battery modules 42, and so on.

Furthermore, in some embodiments, each of the second battery modules 42 of Figs. 7 and 8 may be connected to the B- terminal of the second power interface 428 of the next one of the second battery modules 42 via the B+ terminal of the second power interface 428 thereof, so that the second battery modules 42 are connected to each other in series. In addition, the B-terminal of the second power interface 428 of the first one of the second battery modules 42 (the leftmost one of the second battery modules 42 in Figs. 7 and 8) and the B+ terminal of the second power interface 428 of the last one of the second battery modules 42 (the rightmost one of the second battery modules 42 in Figs. 7 and 8) are connected to the control box 44, so that the control box 44 may receive and output power of the second battery modules 42 or receive power from the external system E and input the power to the second battery modules 42 to charge the second battery cells.

In other embodiments, the B+ terminals of the second power interfaces 428 of the second battery modules 42 of Figs. 7 and 8 may be connected to a first power bus (not shown), and the B- terminals of the second power interfaces 428 of the second battery modules 42 may be connected to a second power bus (not shown), so that the second battery modules 42 are connected to each other in parallel. In addition, the control box 44 is connected to the first power bus and the second power bus, so that the control box 44 may receive and output power of the second battery modules 42 or receive power from the external system E and input the power to the second battery modules 42 to charge the second battery cells.

In practice, whether the second battery modules 42 of the embodiments of Figs. 7 and 8 are connected to each other in series or in parallel depends on the power supply requirements of a large-scale energy storage system including the second battery modules 42, the disclosure is not limited thereto.

In summary, the battery system of the disclosure may include one or more the first battery modules and a plurality of the second battery modules, which are coupled to each other. In addition to including a plurality of the first battery cells, the first battery module also includes the battery management system to manage the first battery cells. The second battery module includes a plurality of the second battery cells. The second battery modules may be electrically coupled to the first battery module(s), so that the second battery cells of the second battery modules may also be managed by the battery management system(s) of the first battery module(s). Furthermore, the housings of the first battery module(s) and the second battery modules may be designed to have the same size, while allowing the first battery module(s) and the second battery modules to provide different voltage capacities. Through the above dual-module design, the battery system of the disclosure has the advantages of easy transportation, easy assembly, reduced hazard, preventing irregular spaces, and flexibility in designing various voltage capacities.

## Claims

1. A battery system (1), **characterized by** comprising:
a first battery module (10) that comprises a battery management system (100), and a plurality of first battery cells (102) electrically coupled to each other, wherein the first battery cells are electrically coupled to the battery management system to be managed by the battery management system; and
a plurality of second battery modules (12) that are coupled to the first battery module, wherein each of the second battery modules comprises a plurality of second battery cells (122) that are electrically coupled to each other, the second battery cells are electrically coupled to the battery management system of the first battery module to be managed by the battery management system,
wherein the battery management system is coupled to an external system (E) to transmit signals with the external system.

2. The battery system of claim 1, wherein the first battery module comprises a first communication interface (106), each of the second battery modules comprises a second communication interface (126), the first communication interface and the second communication interfaces are connected to each other to transmit signals between the first battery module and the second battery modules.

3. The battery system of claim 2, wherein the first communication interface and the second communication interfaces are connected to a communication bus (2) to be connected to each other via the communication bus.

4. The battery system of claim 2, wherein the first communication interface and the second communication interfaces are connected to each other in daisy chain manner.

5. The battery system of any one of claims 1 to 4, wherein the first battery module has a first housing (109), and a battery management display interface (104) that is arranged on the first housing, the battery management display interface is connected to the battery management system to display status of a plurality of batteries of the first battery module and the second battery modules that are received from the battery management system.

6. The battery system of any one of claims 1 to 5, wherein the first battery module comprises a first power interface (108), each of the second battery modules comprises a second power interface (128), the first power interface and the second power interfaces are configured to allow the first battery cells and the second battery cells to output power or to be charged.

7. The battery system of claim 6, wherein each of the first power interface and the second power interfaces has a positive terminal and a negative terminal, the first battery module and the second battery modules are connected to each other in series through the positive terminals and the negative terminals.

8. The battery system of claim 6, wherein each of the first power interface and the second power interfaces has a positive terminal and a negative terminal, the positive terminals are connected to a first power bus and the negative terminals are connected to a second power bus, so that the first battery module and the second battery modules are connected to each other in parallel.

9. The battery system of any one of claims 1 to 4, wherein the first battery module has a first housing (109) for accommodating the battery management system and the first battery cells, each of the second battery modules has a second housing (129) for accommodating the second battery cells, the first housing and the second housings have the same size.

10. The battery system of any one of claims 1 to 9, wherein a number of the second battery cells of each of the second battery modules is greater than a number of the first battery cells, so that voltage capacity of each of the second battery modules is greater than voltage capacity of the first battery module.

11. A battery system (1), **characterized by** comprising:
a first battery module (10) that comprises a first housing (109), a battery management system (100), and a plurality of first battery cells (102) that are electrically coupled to each other, wherein the battery management system and the first battery cells are accommodated in the first housing, the first battery cells are electrically coupled to the battery management system to be managed by the battery management system; and
a plurality of second battery modules (12) that are coupled to the first battery module, wherein each of the second battery modules comprises a second housing (129), and a plurality of second battery cells (122) that are electrically coupled to each other, the second battery cells of each of the second battery modules are accommodated in the second housing, the second battery cells are electrically coupled to the battery management system of the first battery module to be managed by the battery management system,
wherein the first housing and the second housings have the same size, a number of the second battery cells in each of the second housings is greater than a number of the first battery cells in the first housing, so that voltage capacity of each of the second battery modules is greater than voltage capacity of the first battery module, the battery management system is coupled to an external system (E) to transmit signals with the external system.

12. The battery system of claim 11, wherein the first battery module comprises a first communication interface (106), each of the second battery modules comprises a second communication interface (126), the first communication interface and the second communication interfaces are connected to each other to transmit signals between the first battery module and the second battery modules.

13. The battery system of claim 11 or 12, wherein the first battery module has a battery management display interface (104) that is arranged on the first housing, the battery management display interface is connected to the battery management system to display status of a plurality of batteries of the first battery module and the second battery modules that are received from the battery management system.

14. The battery system of any one of claims 11 to 13, wherein the first battery module comprises a first power interface (108), each of the second battery modules comprises a second power interface (128), the first power interface and the second power interfaces are configured to allow the first battery cells and the second battery cells to output power or to be charged.

15. The battery system of claim 14, wherein each of the first power interface and the second power interfaces has a positive terminal and a negative terminal, the first battery module and the second battery modules are connected to each other in series or in parallel through the positive terminals and the negative terminals.
